Europäisches Patentamt

European Patent Office

Office européen des brevets

(11) Numéro de publication: **0 261 011 B2**

(12)
# NOUVEAU FASCICULE DE BREVET EUROPEEN

(45) Date de publication de nouveau fascicule du brevet: (51) Int. Cl.6: **B60T 8/18**
19.07.95

(21) Numéro de dépôt: **87401937.5**

(22) Date de dépôt: **27.08.87**

(54) **Correcteur de freinage asservi à la charge d'un véhicule.**

(30) Priorité: **18.09.86 FR 8613076**

(43) Date de publication de la demande:
**23.03.88 Bulletin 88/12**

(45) Mention de la délivrance du brevet:
**02.05.90 Bulletin 90/18**

(45) Mention de la décision
concernant l'opposition:
**19.07.95 Bulletin 95/29**

(84) Etats contractants désignés:
**DE ES GB IT**

(56) Documents cités:
EP-A- 0 053 528       EP-B- 0 110 109
CH-A- 559 647         CH-A- 567 994
DE-A- 1 780 045       DE-A- 2 146 291
DE-A- 2 258 951       DE-A- 2 631 662
DE-A- 3 224 295       FR-A- 1 348 555
GB-A- 1 296 311       US-A- 4 040 674

(73) Titulaire: **BENDIX France Société Anonyme dite:**
**126, rue de Stalingrad**
**F-93700 Drancy (FR)**

(72) Inventeur: **Carre, Jean-Jacques**
**59 Boulevard de l'Est**
**F-93340 Le Raincy (FR)**
Inventeur: **Levrai, Roland**
**9bis, Av. Gaston Monmousseau**
**F-93240 Stains (FR)**

(74) Mandataire: **Bentz, Jean-Paul et al**
**Bendix Europe Service Techniques**
**Service Brevets,**
**126, rue de Stalingrad**
**F-93700 Drancy (FR)**

EP 0 261 011 B2

## Description

La présente invention se rapporte aux correcteurs de freinage et, plus particulièrement à un tel correcteur asservi à la charge d'un véhicule, selon le préambule de la revendication 1.

Il est souhaitable, pour des raisons d'économie de place et de nombre de pièce, de relier un correcteur de freinage directement au ressort de suspension d'un véhicule en vue de faire varier le freinage des roues d'un véhicule en fonction de sa charge.

On connaît du document GB-A 1 577 029 un correcteur de freinage asservi à la charge d'un véhicule qui est disposé à une extrémité d'un ressort de suspension d'un véhicule et relié au ressort par un ensemble de cames de façon à faire varier la pression de freinage en fonction de la charge du véhicule. Ce dispositif présente des invconvénients en ce qu'il comprend un nombre important de pièces, ce qui le rend délicat, onéreux et peu fiable.

On connaît également, du document DE-A 2 631 662, un correcteur de freinage, destiné à être asservi à la charge d'un véhicule, comprenant un corps dans lequel est formé un alésage agencé de façon à coopérer avec un élément de clapet pour ouvrir ou fermer un passage de fluide entre une entrée et une sortie du correcteur, le correcteur comprenant un moyen de liaison destiné à relier le correcteur à un ressort de suspension (36) du véhicule, le moyen de liaison comprenant un élément en matériau élastomère relié au moyen de piston, l'élément en élastomère étant agencé de façon que ses dimensions varient en fonction de la force qui lui est appliquée, de façon à entraîner le déplacement du moyen de piston. Enfin, on connaît, par le document CH-567 954, un correcteur de freinage qui correspond au préambule de la revendication 1.

L'invention a pour objet un tel correcteur de freinage qui permette de dégager un amortisseur placé à l'intérieur du ressort de suspension.

Pour ce faire, selon l'invention, l'élément en matériau élastomère est monté prisonnier entre deux spires du ressort de suspension.

D'autres caractéristiques et avantages de la présente invention ressortiront de la description suivante de deux modes de réalisations donnés à litre illustratif, mais nullement limitatif, faite en relation avec les dessins annexés, sur lesquels :

- la Figure 1 est une vue en coupe longitudinale d'un correcteur asservi à la charge d'un véhicule selon un mode de réalisation externe à la présente invention;
- la Figure 2 est une vue schématique d'un correcteur selon l'invention.

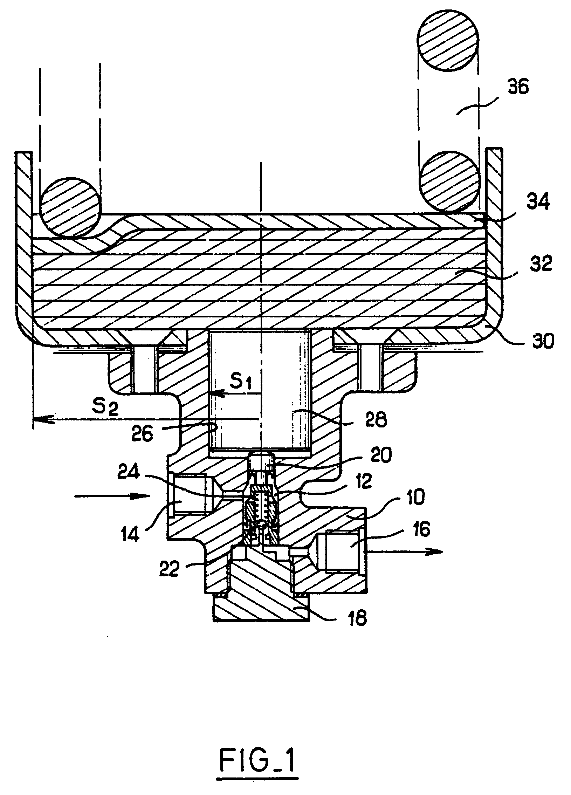

Comme représenté sur la figure 1, un correcteur de freinage asservi à la charge d'un véhicule comprend un corps de correcteur 10 dans lequel est formé un alésage étagé 12 communiquant avec une entrée 14 destinée à être reliée à un émetteur hydraulique, (non représenté), par exemple un maître-cylindre, et une sortie 16 destinée à être reliée à un récepteur hydraulique (non représenté), par exemple les freins de roues arrières du véhicule. L'alésage étagé 12 est fermé par un élément de fermeture 18. Dans l'alésage étagé 12 est monté à coulissement étanche un piston étagé 20 qui est destiné à coopérer avec une bille 22 pour fermer le passage hydraulique entre l'entrée 14 et la sortie 16. Le piston étagé 20 est sollicité vers sa position fermant le passage hydraulique par un ressort 24. Dans une portion élargie 26 de l'alésage étagé 20 est monté à coulissement un piston d'actionnement 28.

Le corps de correcteur 10 est rattaché à un élément en forme de coupe 30 qui est monté fixe sur la carrosserie du véhicule (non représentée). Un disque en matériau élastomère 32, qui dans l'exemple illustré est en caoutchouc synthétique, est monté dans l'élément en forme de coupe 30. Un disque d'appui 34 est monté avec jeu dans l'élément en forme de coupe 30 et forme une surface d'appui pour un ressort de suspension 36 du véhicule.

Ainsi, avec le d ispositif décrit ci-dessus, la force exercée sur le disque élastomère 32 pa le ressort de suspension 36 est fonction de la charge du véhicule. La force du ressort 36 provoque la déformation du disque élastomère 32 qui, étant donné qu'il est confiné par l'élément en forme de coupe 30 et le disque d'appui 34, exerce une force sur le pistston d'actionnement 28. Le déplacement du piston d'actionnement 28 sous l'effet de la déformation du disque élastomère 32 provoque le déplacement du piston étagé 20, ouvrant le passage hydraulique entre l'entrée 14 et la sortie 16. L'alimentation des freins de roue arrière augmente en fonction de la charge du véhicule.

La force exercée sur le piston d'actionnement 28 par le ressort de suspension 36 est fonction de

$$\frac{S_1}{S_2}$$

où $S_1$ et $S_2$ sont les sections du piston d'actionnement 28 et du disque élastomère 32, respectivement.

Comme le montre la figure 1, le mode de réalisation qui vient d'être décrit ne permet pas de dégager un amortisseur placé à l'intérieur du ressort de suspension 36.

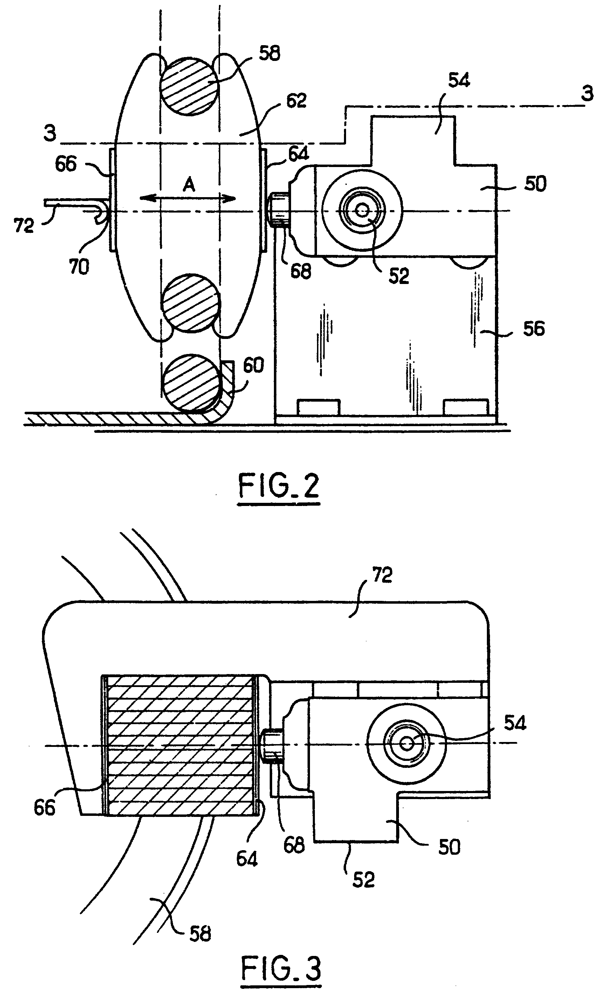

Sur les figures 2 et 3 est représenté un correcteur asservi à la charge d'un véhicule et conforme à l'invention.

Ce dispositif comprte un correcteur 50 muni d'une entrée hydraulique 52 et d'une sortie 54 analogues à celles du mode de réalisation précédent. Le correcteur 50 est monté sur un support 56 solidaire de la carrosserie du véhicule (non représentée). Sur la figure 2 est représentée une extrérémité 58 d'un ressort de suspension du véhicule qui est reçu dans une coupelle 60 montée fixe sur la carrosserie du véhicule. Un bloc d'élastomère 62, par exemple du caoutchouc, est monté prisonnier entre deux spires du ressort de suspension 58. Le bloc d'élastomère 62 comporte deux plaques d'appui 64,66, dont l'une 64 est en butée contre un piston 68 du correcteur dont la fonction est analogue à celle du correcteur de la figure 1. L'autre plaque d'appui 66 est montée en butée contre une surface interne 70 d'une bride 72 montée fixe sur le support 56.

La force exercée par les spires du ressort de suspension 58 sur le bloc 62 provoque la déformation de ce dernier dans la direction de la flèche A, ce qui entraîne l'écartement des deux plaques d'appui 64 et 66. Etant donné que la plaque d'appui est fixe par rapport au correcteur 50, seule la plaque d'appui 64 se déplace, provoquant le déplacement du piston 68 du correcteur 50 ouvrant le passage hydraulique entre l'entrée 52 et la sortie 54. Une augmentation de la charge du véhicule entraîne une alimentation plus importante des freins de roue arrière du véhicule. La déformation du bloc d'élastomère 62 est proportionnelle à la flèche du ressort de suspension 58 qui, elle, est proportionnelle à la charge du véhicule.

Bien que les deux modes de réalisation illustrés permettent de varier la pression de freinage des roues arrières d'un véhicule en fonction de la charge sur l'essieu arrière du véhicule, le mode de réalisation de l'invention, représenté sur les figures 2 et 3 présente l'avantage, par rapport à celui de la figure 1, qu'il permet de dégager un amortisseur placé à l'intérieur du ressort de suspension 58.

## Revendications

1. Correcteur de freinage, destiné à être asservi à la charge d'un véhicule, comprenant un corps (10) percé d'un alésage (12) dans lequel est logé un clapet (22) susceptible d'être actionné par un piston (28) pour ouvrir ou fermer le passage de fluide entre une entrée (14) et une sortie (16) du correcteur en fonction d'une force reçue par le piston (28), ce correcteur comprenant un élément en matériau élastomère dont les dimensions varient en fonction de la force qui lui est appliquée, qui est soumis à une force que lui applique un ressort de suspension du véhicule, et qui transmet audit piston une partie au moins de cette force, caractérisé en ce que l'élément en matériau élastomère (32) est monté prisonnier entre deux spires du ressort de suspension (36).

2. Correcteur de freinage selon la revendication 1, caractérisé en ce que l'élément en matériau élastomère (62) est confiné à l'intérieur d'une bride (72) solidaire du correcteur.

## Claims

1. Brake corrector intended to be subject to the load of a vehicle, comprising a body (10) pierced with a bore (12) in which is housed a shutter (22), capable of being activated by a piston (28), for opening or closing the fluid passage between an inlet (14) and an outlet (16) of the corrector as a function of a force exerted on the piston (28), this corrector comprising an element made of elastomeric material whose dimensions vary as a function of the force applied thereto, which is subjected to a force applied to it by a suspension spring of the vehicle, and which transmits at least a part of this force to the said piston, characterized in that the element made of elastomeric material (32) is mounted immovably between two turns of the suspension spring (36).

2. Brake corrector according to Claim 1, characterized in that the element made of elastomeric material (62) is confined inside a flange (72) fixed to the corrector.

## Patentansprüche

1. Bremsregler zur fahrzeuglastabhängigen Betätigung, mit einem Körper (10), in dem eine Bohrung (12) ausgebildet ist, in welcher ein Ventilelement (22) angeordnet ist, welches von einem Kolben (28) betätigt werden kann, um den Fluiddurchgang zwischen einem Einlaß (14) und einem Auslaß (16) des Reglers in Abhängigkeit von einer von dem Kolben (28) empfangenen Kraft zu öffnen oder zu schließen, wobei der Regler ein Element aus einem Elastomermaterial umfaßt, dessen Abmessungen sich in Abhängigkeit von der auf es aufgebrachten Kraft verändern, das einer Kraft ausgesetzt ist, die eine Aufhängungsfeder des Fahrzeuges auf es ausübt, und das auf den Kolben wenigstens einen Teil dieser Kraft überträgt, dadurch gekennzeichnet, daß das Element (32) aus einem Elastomermaterial eingezwängt zwischen zwei Windungen der Aufhängungsfeder (36) angeordnet ist.

2. Bremsregler nach Anspruch 1, dadurch gekennzeichnet, daß das Element (62) aus einem Elastomermaterial im Inneren eines fest mit dem Regler verbundenen Flansches (72) eingeschlossen ist.

FIG_1

FIG.2

FIG.3